(19) Europäisches Patentamt
European Patent Office
Office européen des brevets

(11) Veröffentlichungsnummer: **0 128 316**
**A1**

(12) # EUROPÄISCHE PATENTANMELDUNG

(21) Anmeldenummer: **84104825.9**

(22) Anmeldetag: **30.04.84**

(51) Int. Cl.³: **C 09 B 62/01**, D 06 P 3/66, D 06 P 3/10

(30) Priorität: **13.05.83 DE 3317383**

(43) Veröffentlichungstag der Anmeldung: **19.12.84**
**Patentblatt 84/51**

(84) Benannte Vertragsstaaten: **CH DE FR GB LI**

(71) Anmelder: **BAYER AG, Konzernverwaltung RP**
**Patentabteilung, D-5090 Leverkusen 1 Bayerwerk (DE)**

(72) Erfinder: **Jäger, Horst, Dr., Carl-Rumpff-Strasse 37, D-5090 Leverkusen (DE)**
Erfinder: **Schündehütte, Karl Heinz, Prof. Dr., Klief 75, D-5090 Leverkusen 3 (DE)**
Erfinder: **Trautner, Kersten, Dr., Haferkamp 1, D-5000 Köln 80 (DE)**

(54) **Disazoreaktivfarbstoffe.**

(57) Es werden neue Disazoreaktivfarbstoffe bereitgestellt, die folgender allgemeiner Formel entsprechen:

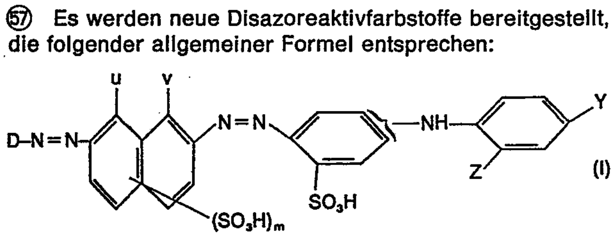

(I)

worin D = Rest einer reaktivgruppenhaltigen Diazokomponente der Benzol- oder Naphthalinreihe,

u, v = $NH_2$ oder OH und

u ≠ v,

Z, Y = $NO_2$ oder $SO_3H$ und

Z ≠ Y sowie

m = 1 oder 2.

Die neuen Farbstoffe sind in hervorragendem Maße zum Färben und Bedrucken von hydroxy- und/oder amidgruppenhaltigen Materialien geeignet.

EP 0 128 316 A1

BAYER AKTIENGESELLSCHAFT 5090 Leverkusen, Bayerwerk

Konzernverwaltung RP
Patentabteilung

## Disazoreaktivfarbstoffe

Die Erfindung betrifft neue Disazoreaktivfarbstoffe der allgemeinen Formel

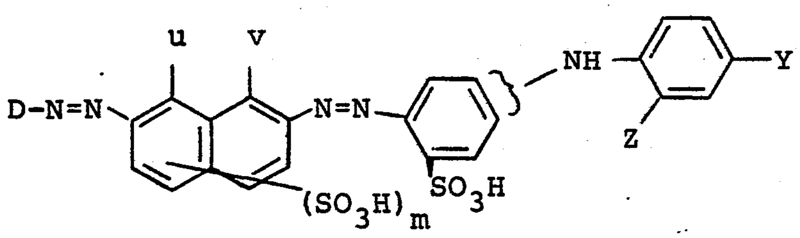

(1)

worin D = Rest einer reaktivgruppenhaltigen Diazokomponente der Benzol- oder Naphthalinreihe

u, v = $NH_2$ oder OH und
u ≠ v

Z, Y = $NO_2$ oder $SO_3H$ und
Z ≠ Y

sowie m = 1 oder 2.

Bevorzugte Untergruppen der Reaktivfarbstoffe der Formel (1) sind die folgenden:

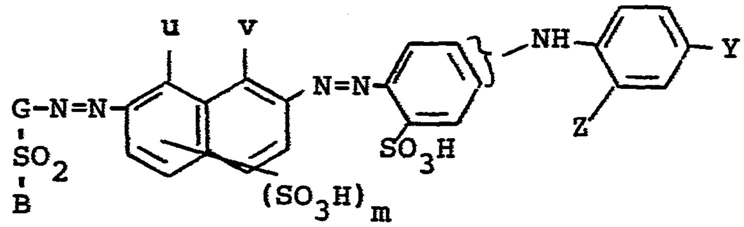

(2)

wobei

G = zweiwertiger Benzol- oder Naphthalinrest

B = $-CH=CH_2$, $-CH_2-CH_2-OSO_3H$, $-CH_2-CH_2-OPO_3H_2$, $-CH_2-CH_2S_2O_3H$, $-CH=CHCl$, $-CH_2-CH_2Cl$

und wobei u, v, Y, Z und m die unter (1) angegebene Bedeutung besitzen

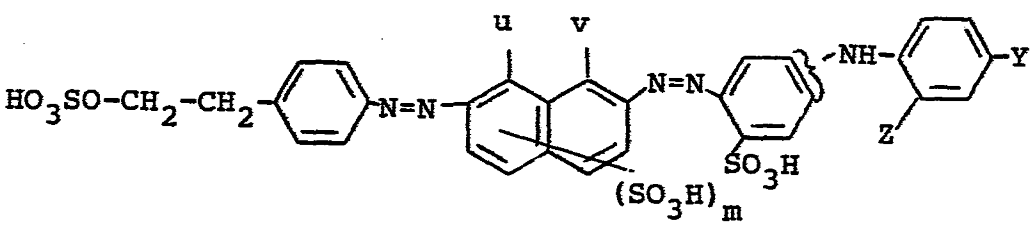

(3)

wobei u, v, Y, Z und m die unter (1) angegebene Bedeutung besitzen

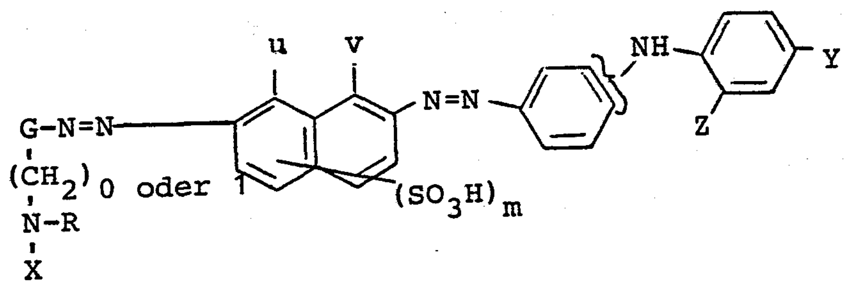

(4)

wobei

G = zweiwertiger Benzol- oder Naphthalinrest,

R = H, $CH_3$ oder $C_2H_5$

X = Rest einer heterocyclischen Reaktivkomponente

und worin u, v, Y, Z und m die unter (1) angegebene Bedeutung besitzen,

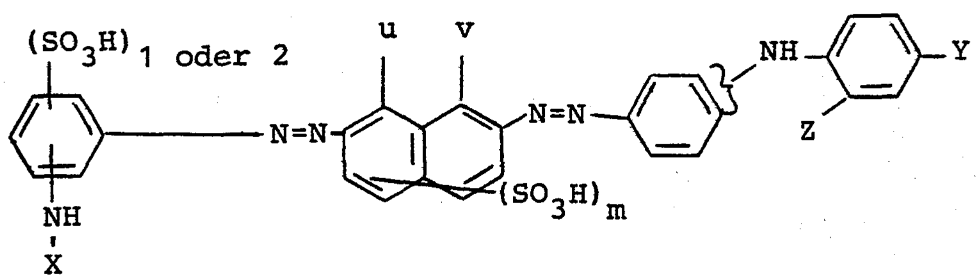

(5)

worin

X = Rest einer heterocyclischen Reaktivkomponente und

worin u, v, Y, Z und m die unter (1) angegebene Bedeutung besitzen.

Als zweiwertige Benzol- oder Naphthalinreste G kommen z.B. die folgenden gegebenenfalls substituierten Reste in Frage:

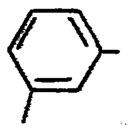 , 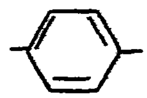 , 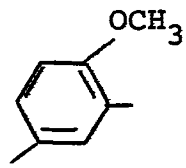 , 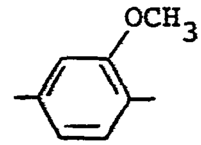 ,

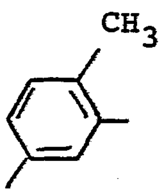 , 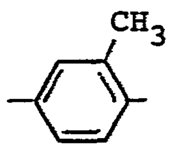 , 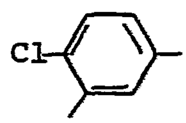 , 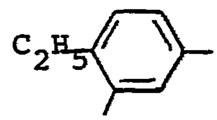 ,

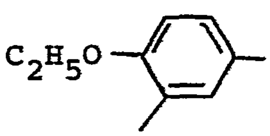 ; 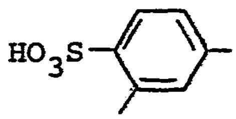 , 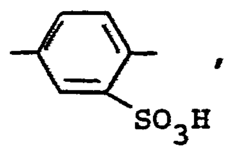 , 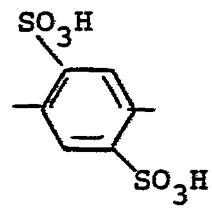 ,

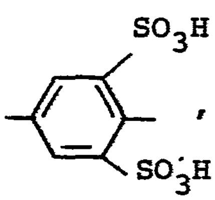 , 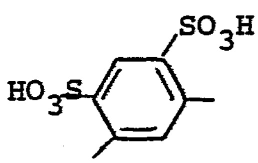 , 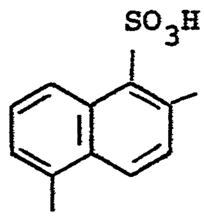 , 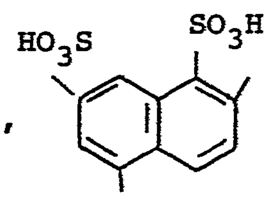 ,

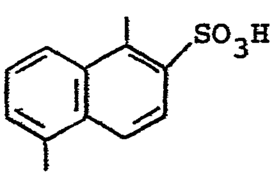 , 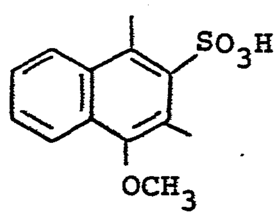 , 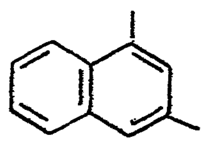 ,

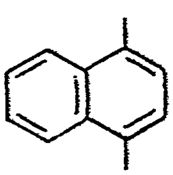 .

Weiterhin bevorzugt sind Reaktivfarbstoffe der Formeln (4) bis (5), wobei X folgende Bedeutungen besitzt:

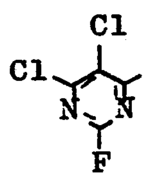 , 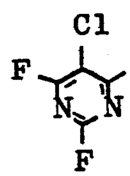 , 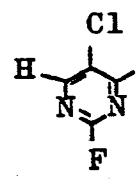 , 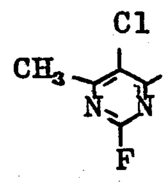 ,

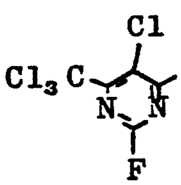 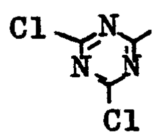 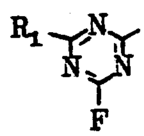 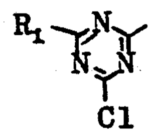

Geeignete Substituenten $R_1$ sind beispielsweise Aminogruppen wie

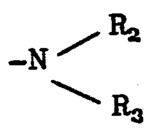 , $-OR_4$ oder $-SR_4$

worin

$R_2$ und $R_3$ unabhängig voneinander Wasserstoff, Amino, $C_1$-$C_4$-Alkyl, Aryl, Aralkyl oder Cycloalkyl bedeuten oder zusammen, gegebenenfalls unter Einschluß eines oder mehrerer Heteroatome insbesondere Sauerstoff und/oder Stickstoff, einen Ring bilden, (insbesondere einen 5- oder 6-gliedrigen Ring),

$R_4$ für Wasserstoff, $C_1$-$C_4$-Alkyl, Aryl oder Aralkyl steht.

Die Alkyl-, Aryl- oder Aralkylreste $R_2$, $R_3$ und $R_4$ können in der Farbstoffchemie übliche Substituenten aufweisen, wie z.B. $SO_3H$, OH, $NH_2$, Alkoxy ($C_1$-$C_4$), COOH, Halogen, CN (insbesondere Cl).

Die Alkylreste $R_2$, $R_3$ und $R_4$ besitzen bevorzugt 1 bis 4 Kohlenstoffatome. Die Arylreste $R_2$, $R_3$ und $R_4$ stehen bevorzugt für Phenyl oder Naphthyl, Aralkyl $R_2$, $R_3$ und $R_4$ steht vorzugsweise für Alkyl ($C_1$-$C_4$), welches durch Phenyl oder Naphthyl substituiert ist.

Die Reste D und G können die bei Azofarbstoffen üblichen Substituenten enthalten. Als disbezügliche Substituenten sind z.B. folgende zu nennen:

Alkylgruppen mit 1 bis 4 Kohlenstoffatomen, wie Methyl, Ethyl, Propyl, Isopropyl und Butyl, Alkoxygruppen mit 1 bis 4 Kohlenstoffatomen, wie Methoxy, Ethoxy, Propyloxy, Isopropyloxy und Butyloxy, Acylaminogruppen mit 1 bis 6 Kohlenstoffatomen, wie Acetylamino, Propionylamino und Benzoylamino, Carbamoyl, Sulfamoyl, Ureido-, Hydroxy- und Carboxygruppe, Halogen, wie Fluor, Chlor und Brom, und die Sulfonsäuregruppen.

Für die erfindungsgemäßen Farbstoffe geeignete heterocyclische Reaktivgruppen X, welche mindestens einen abspaltbaren Substituenten an einen heterocyclischen Rest gebunden enthalten, sind unter anderem solche, die

mindestens einen reaktiven Substituenten an einen 5- oder 6-gliedrigen heterocyclischen Ring gebunden enthalten, wie an einen Monozin-, Diazin-, Triazin-, z.B. Pyridin-, Pyrimidin-, Pyridazin-, Pyrazin-, Thiazin-, Oxazin oder asymmetrischen oder symmetrischen Triazinring, oder an ein derartiges Ringsystem, welches einen oder mehrere ankondensierte aromtische Ringe aufweist, wie ein Chinolin-, Phthalazin-, Cinnolin , Chinazolin-, Chinoxalin-, Acridin-, Phenazin- und Phenanthridin-Ring-System; die 5- oder 6-gliedrigen hetrocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substitueten am Heterocyclus sind beispielsweise zu erwähnen:

Halogen (Cl, Br oder F), Ammonium einschließlich Hydrazinium, Sulfonium, Sulfonyl, Azido-($N_3$), Rhodanido, Thio, Thiolether, Oxiether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 3-Propylamino-4-chlortriazinyl-6-, 2-ß-Oxethylamino-4-chlortriazinyl-6-, 2-Di-ß-oxethylamino-4-chlortriazinyl-6- und die entsprechenden Schwefelsäurehalbester, 2-Diethylamino-4-chlor-

triazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxi-4-chlortriazinyl-6-, 2-(o-, m- oder p-Methyl- oder Methoxyphenyl)-oxi-4-chlor-triazinyl-6-, 2-Alkylmercapto- oder 2-Arylmercapto- oder 2-(substituiertes Aryl)-mercapto-4-chlortriazinyl-6-, wie 2-ß-Hydroxyethyl-mercapto-4-chlortriazinyl-6-, 2-Phenylmercapto-4-chlor-triazinyl-6-, 3-(4'-Methylphenyl)-mercapto-4-chlortriazinyl-6-, 2-(2',4'-Dinitro)-phenylmercapto-4-chlortriazinyl-6-, 2-Methyl-4-chlor-triazinyl-6-, 2-Phenyl-4-chlor-triazinyl-6-, 2,4-Difluortriazinyl-6, Monofluortriazinylreste, die durch Amino-, Alkylamino-, Aralkylamino-, Acylaminogruppen substituiert sind, wobei Alkyl, insbesondere gegebenenfalls substituiertes $C_1$-$C_4$-Alkyl, Aralkyl, insbesondere gegebenenfalls substituiertes Phenyl-, $C_1$-$C_4$-Alkyl und Aryl, insbesondere gegebenenfalls durch Sulfo-, Alkyl-, insbesondere $C_1$-$C_4$-Alkyl-, Alkoxy-, insbesondere $C_1$-$C_4$-Alkoxy, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-ß-Methoxy-ethylamino-4-fluor-triazinyl-6, 2-ß-Hydroxyethylamino-4-fluor-triazinyl-6, 2-Di-(ß-hydroxyethylamino)-4-fluortriazinyl-6-, 2-ß-Sulfoethylamino-4-fluor-triazinyl-6, 2-ß-Sulfoethyl-methylamino-4-fluor-triazinyl-6, 2-Carboxymethylamino-4-fluor-triazinyl-6, 2-ß-Cyanethyl-amino-4-fluor-triazinyl-6, 2-Benzolamino-4-fluor-triazinyl-6, 2-ß-Phenylethylamino-4-fluor-triazinyl-6, 2-Benzyl-methylamino-4-fluor-triazinyl-6, 2-(x-Sulfo-benzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(2'-Carboxy-4-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6,

2-(N-ß-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonapthyl-(1'))-4-fluor-triazinyl-6, Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder -carbonyl-, ß-(4',5'-Dichlorpyridazon-6'-yl-1')-ethylcarbonyl-, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- oder N-Ethyl-N-(2,4-dichlortriazinyl-6)-aminoacetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-, 6-Fluor-5-chlor-pyrimidinyl-4, 6-Fluor-5-trifluormethyl-pyrimidinyl-4, 6-Fluor-2-methyl-pyrimidinyl-4, 6-Fluor-5-chlor-2-methyl-pyrimidinyl-4, 5,6-Difluorpyrimidinyl-4, 6-Fluor-5-chlor-2-trifluromethyl-pyrimidinyl-4, 6-Fluor-2-phenyl-pyrimidinyl-4, 6-Fluor-5-cyan-pyrimidinyl-4, 6-Fluor-5-nitro-pyrimidinyl-4, 6-Fluor-5-methylsulfonyl-pyrimidinyl-4, 6-Fluor-5-phenylsulfonyl-pyrimidinyl-4, sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringen, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methyl-sulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlorpyrimidinyl-4-, 2-Sulfoethylsulfonyl-6-methyl-pyrimidinyl-4-, 2-Methylsulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methyl-sulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl-, ammoniumgruppenhaltige Triazinringe, wie Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-Aminopiperidinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-Sulfophenyl)-aminotriazinyl-6-, ferner 4-Phenylamino- oder -4-(sulfophenylamino)-triazinyl-6-Reste, die in 2-Stellung über eine Stickstoffbindung das 1,4-Bis-azabicyclo-[2,2,2]-octan oder das 1,2-Bis-aza-bicyclo-[0,3,3]-octan quartär gebunden enthalten, 2-Pyridinium-4-phenylamino- oder -4-(o-, m- oder p-Sulfophenyl)-aminotriazinyl-6- sowie entsprechende 2-Oniumtriazinyl-6-Reste, die in 4-Stellung durch Alkylamino-, wie Methylamino-, Ethylamino- oder ß-Hydroxyethylamino- oder Alkoxy-, wie Methoxy- oder Ethoxy-, oder Aroxy-, wie Phenoxy- oder Sulfophenoxy-Gruppen substituiert sind: 2-Chlorbenzthiazol-5- oder -6-carbonyl- oder -5- oder -6-sulfonyl-, 2-Arylsulfonyl- oder -Alkylsulfonylbenzthia-

zol-5- oder -6-carbonyl- oder -5- oder -6-sulfonyl-, wie 2-Methyl-sulfonyl- oder 2-Ethylsulfonylbenzthiazol-5- oder 6-sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxauol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyan-phenyl, 2,4-Difluor-1,3,5-tricanphenyl, 2,4,5-Trifluor-1,3-dicyan-phenyl, 2,4-Dichlor-5-methylsulfonyl-pyrimidinyl-6, 2,4-Trichlor-5-ethylsulfonyl-pyrimidinyl-6, 2-Fluor-5-methylsulfonyl-6'-(2'-sulfophenylamino)-pyrimidinyl-4, 2,5-Dichlor-6-methylsulfonyl-pyrimidinyl-4.

Die Erfindung betrifft weiterhin Verfahren zur Herstellung von Disazoreaktivfarbstoffen der Formel (1).

Die Verbindungen der Formel (1) sind in der Hauptsache durch folgende Verfahren zugänglich:

A) Ein Amin der Formel

$$D\text{-}NH_2 \qquad (7)$$

wird diazotiert und mit einer Kupplungskomponente der Formel

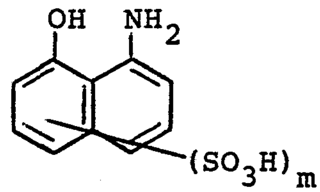

(8)

zu einer Verbindung der Formel

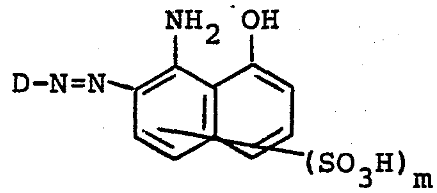

(9)

im sauren Medium gekuppelt und die daraus resultierende Azoverbindung der Formel (9) wird mit der aus einem Amin der Formel

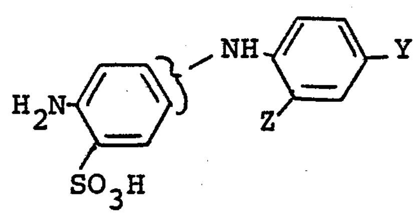

(10)

hergestellten Diazoniumverbindung im neutralen bis schwach alkalischen Medium zu einer Disazoverbindung der Formel

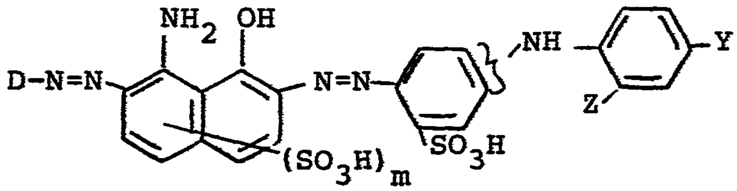

(1a)

vereinigt.

B) Ein Amin der Formel

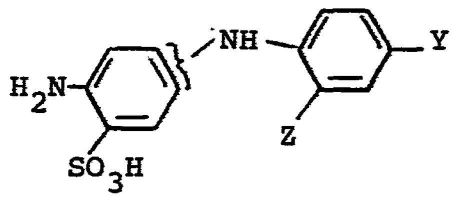

(10)

wird diazotiert und im sauren Medium mit einer Kupplungskomponente der Formel

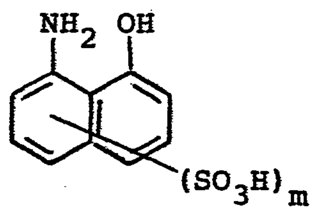

(8)

zu einer Azoverbindung der Formel

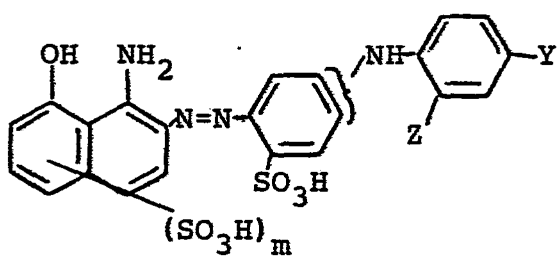

(11)

vereinigt und die resultierende Verbindung mit der aus einem Amin der Formel

$$D-NH_2 \qquad (7)$$

hergestellten Diazoniumverbindung im neutralen bis schwach alkalischen Medium zu einer Disazoverbindung der Formel

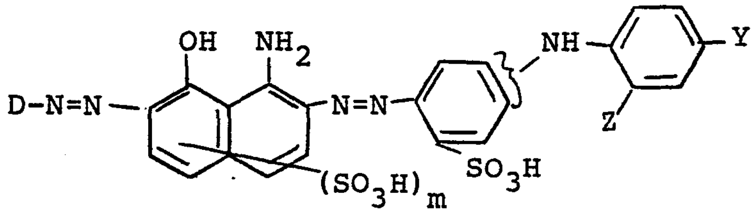

(1b)

gekuppelt.

C) Eine weitere Variante zur Herstellung von Farbstoffen der Formel

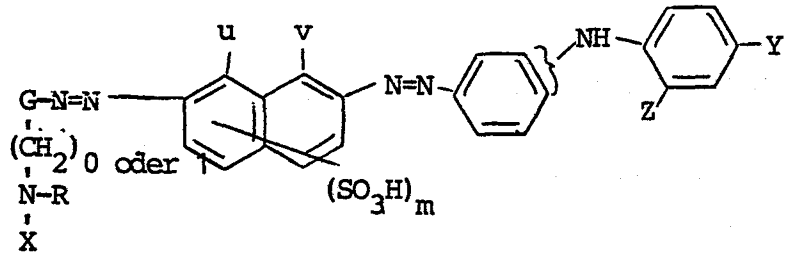

(4)

besteht darin, daß zunächst in bekannter Weise Disazofarbstoffe der Formel

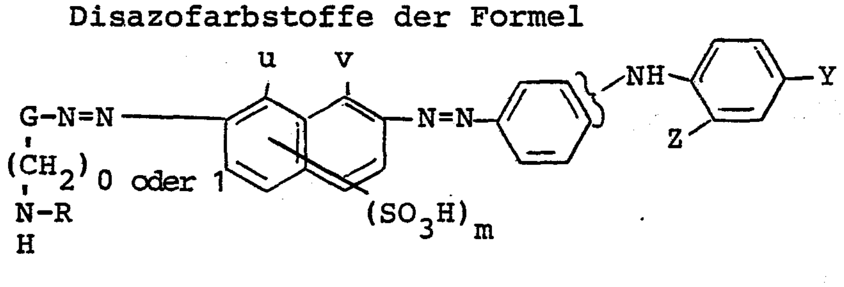

(12)

hergestellt und diese mit einer Reaktivkomponente der Formel

X-Y' (13)

unter Abspaltung von HY' kondensiert werden,

wobei Y' = als HY' abspaltbare Gruppe, insbesondere Halogen.

Als Ausgangsverbindungen zur Herstellung der Reaktivfarbstoffe der Formel (1) können beispielsweise genannt werden:

a) Kupplungskomponenten der Formel (8)

1-Amino-8-hydroxy-naphthalin-3,6-disulfonsäure (H-Säure)
1-Amino-8-hydroxy-naphthalin-4,6-disulfonsäure (K-Säure)
1-Amino-8-hydroxy-naphthalin-4-sulfonsäure

b) Reaktivgruppenhaltige Diazokomponenten der Formel (7)

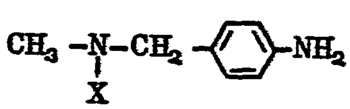 ,

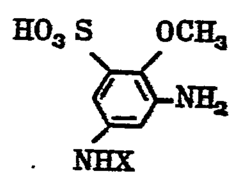 ,

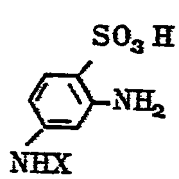 ,

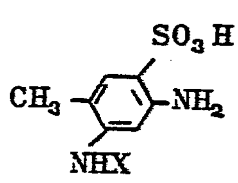 ,

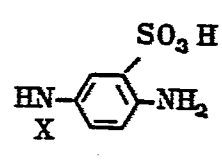 ,

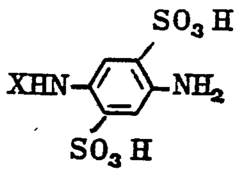 , 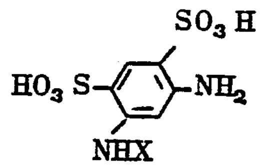 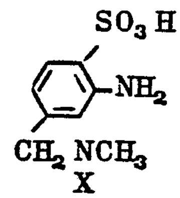

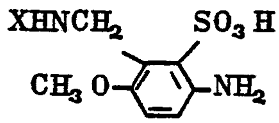 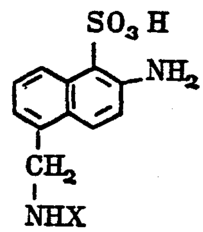 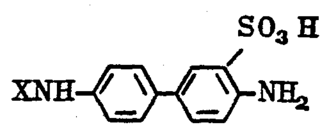

4-Vinylsulfonylanilin,
3-Vinylsulfonylanilin,
2,5-Dichlor-4-vinylsulfonylanilin,
2-Methoxy-5-vinylsulfonylanilin,
4-ß-Chlorethylsulfonylanilin,
4-ß-Chlorvinylsulfonylanilin,
4-ß-Sulfatoethylsulfonylanilin,
3-ß-Sulfatoethylsulfonylanilin,
4-ß-Sulfatoethylsulfonyl-2-chlor-anilin,
4-ß-Sulfatoethylsulfonyl-2-methyl-anilin,
5-ß-Sulfatoethylsulfonyl-2-methoxy-anilin,
2-Amino-8-ß-sulfatoethylsulfonylnaphthalin-6-sulfonsäure,
2-Ethylsulfonyl-6-aminobenzthiazol,
2-Fluor-6-aminobenzthiazol,
2-Chlor-6-aminobenzthiazol,

c) Diazokomponenten der Formel (10)

4-(4'-Sulfo-2'-nitrophenylamino-)-1-amino-benzol-2-sulfonsäure,

5-(4'-Sulfo-2'-nitrophenylamino)-1-amino-benzol-2-sulfonsäure,
4-(4'-Nitro-2'-sulfophenylamino)-1-amino-benzol-2-sulfonsäure,
5-(4'-Nitro-2'-sulfophenylamino)-1-amino-benzol-2-sulfonsäure.

Die Reaktionsbedingungen der Herstellungsvarianten entsprechen den auf dem Gebiet der Diazotierung, Kupplung und Acylierung üblichen Bedingungen.

Geeignete Reaktivkomponenten der Formel (13) sind beispielsweise solche, die den vorgenannten Reaktivgruppen zugrundeliegen, d.h. im allgemeinen die Halogenide, insbesondere die Chloride der genannten Komponenten X. Aus der großen Zahl der zur Verfügung stehenden Verbindungen seien hier auszugsweise erwähnt:

Trihalogen-symmetrische-triazine, wie Cyanurchlorid und Cyanurbromid, Dihalogen-monoamino- und monosubstituierte aminosymmetrische triazine, wie 2,6-Dichlor-4-aminotriazin, 2,6-Dichlor-4-methylaminotriazin, 2,6-Dichlor-4-ethylaminotriazin, 2,6-Dichlor-4-oxethylaminotriazin, 2,6-Dichlor-4-phenylaminotriazin, 2,6-Dichlor-4-(o-, m- oder p-sulfophenyl)-aminotriazin, 2,6-Dichlor-4-(2',3'-,2',4'-,3',4'- oder -3',5'-disulfophenyl)-aminotriazin, Dihalogen-alkoxy- und aryloxysym. triazine, wie 2,6-Dichlor-4-methoxytriazin, 2,6-Dichlor-4-ethoxytriazin, 2,6-Dichlor-4-phenoxytriazin,

2,6-Dichlor-4-(o-, m- oder p-sulfophenyl)-oxitriazin, Dihalogen-alkylmercapto- und -arylmercapto sym. triazine, wie 2,6-Dichlor-4-ethylmercapto-triazin, 2,6-Dichlor-4-phenylmercaptotriazin, 2,6-Dichlor-4-(p-methylphenyl)-mercaptotriazin, 2,4,6-Trifluortriazin, 2,4-Difluor-6-(o-, m-, p-methyl-phenyl)-amino-triazin, 2,4-Difluor-6-(o-, m-, p-sulfophenyl)-amino-triazin, 2,4-Difluor-6-methoxy-triazin, 2,4-Difluor-6-(2',5'-disulfophenyl)-amino-triazin, 2,4-Difluor-6-(6'-sulfonaphthyl-2')-amino-triazin, 2,4-Difluor-6-(o-, m-, p-ethylphenyl)-amino-triazin, 2,4-Difluor-6-(o-, m-, p-chlorphenyl)-amino-triazin, 2,4-Difluor-6-(o-, m-, p-methoxyphenyl)-amino-triazin, 2,4-Difluor-6-(2'-methyl-5'-sulfophenyl)-amino-triazin, 2,4-Difluor-6-(2'-methyl-4'-sulfophenyl)-amino-triazin, 2,4-Difluor-6-(2'-chlor-4'-sulfophenyl)-amino-triazin, 2,4-Difluor-6-(2'-chlor-5'-sulfophenyl)-amino-triazin, 2,4-Difluor-6-(2'-methoxy-4'-sulfophenyl)-amino-triazin, 2,4-Difluor-6-(o-, m-, p-carboxyphenyl)-amino-triazin, 2,4-Difluor-6-(N-methyl-phenyl)amino-triazin, 2,4-Difluor-6-(N-ethyl-phenyl)-amino-triazin, 2,4-Difluor-6-(N-isopropyl-phenyl)-amino-triazin, 2,4-Difluor-6-cyclohexylamino-triazin, 2,4-Difluor-6-morpholino-triazin, 2,4-Difluor-6-piperidino-triazin, 2,4-Difluor-6-benzylamino-triazin, 2,4-Difluor-6-N-methyl-benzylamino-triazin, 2,4-Dilfuor-6-ß-phenylethyl-amino-triazin, 2,4-Difluor-6-(X-sulfo-benzyl)-amino-triazin, 2,4-Difluor-6-(2',4'-disulfophenyl)-amino-triazin, 2,4-Difluor-6-(3'-5'-disulfophenyl)-amino-triazin, 2,4-Difluor-6-(2'-carboxy-4'-sulfo-phenyl)-amino-triazin, 2,4-Difluor-6-(2',5'-disulfo-4-methoxyphenyl)-amino-triazin, 2,4-Difluor-(2'-methyl-4',6'-disulfophenyl)-amino-triazin, 2,4-Difluor-(6',8'-disulfonaphthyl-(2')-amino-triazin, 2,4-Difluor-(4',8'-disulfonaphthyl-(2'))-amino-triazin, 2,4-Difluor-(4',8'-disulfonaphthyl-(2'))-amino-triazin, 2,4-Difluor-4',6',8'-trisulfo-naphthyl-(2'))-amino-triazin, 2,4-Difluor-(3',6',8'-trisulfonaphthyl-(2'))-amino-triazin, 2,4-Difluor-(3',6'-disulfonaphthyl-(1'))-amino-triazin, 2,4-Difluor-6-amino-triazin, 2,4-Difluor-6-methylamino-triazin, 2,4-Difluor-6-ethylamino-triazin, 2,4-Difluor-6-methoxyethoxy-triazin, 2,4-Difluor-6-methoxyethylamino-triazin, 2,4-Difluor-6-dimethylamino-triazin, 2,4-Difluor-6-diethylamino-triazin, 2,4-Difluor-6-iso-propylamino-triazin, Tetrahalogenpyrimidine, wie Tetrachlor-, Tetrabrom- oder Tetrafluor-pyrimidin, 2,4,6-Trihalogenpyrimidine, wie 2,4,6-Trichlor-, Tribrom- oder Trifluor-pyrimidin, Dihalogenpyrimidine, wie 2,4-Dichlor-, -Dibrom- oder -Difluorpyrimidin; 2,4,6-Trichlor-5-nitro- oder -5-methyl- oder -5-carbomethoxy- oder -5-carboethoxy- oder -5-carboxymethyl- oder -5-mono-, -di- oder -trichlormethyl- oder -5-carboxy- oder -5-sulfo- oder -5-cyano- oder -5-vinyl-pyrimidin, 2,4-Difluor-6-methylpyrimidin, 2,6-Difluor-4-methyl-5-chlorpyrimidin, 2,4-Difluorpyrimidin-5-ethylsulfon, 2,6-Difluor-4-chlorpyrimidin, 2,4,6-Trifluor-5-chlorpyrimidin, 2,6-Difluor-4-methyl-5-brompyrimidin, 2,4-Difluor-5,6-dichlor- oder -dibrompyrimidin, 4,6-Difluor-2,5-dichlor- Oder -dibrompyrimidin, 2,6-Difluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester

oder -5-carbonsäureamide, 2,6-Difluor-5-methyl-4-chlorpyrimidin, 2,6-Difluor-5-chlorpyrimidin, 2,4,6-Trifluor-5-methylpyrimidin, 2,4,5-Trichlor-6-methylpyrimidin, 2,4-Difluor-5-nitro-6-chlorpyrimidin, 2,4-Difluor-5-cyanpyrimidin, 2,4-Difluor-5-methylpyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin, 2,4-Difluor-5-nitro-pyrimidin, 2,4-Difluor-5-trifluormethylpyrimidin, 2,4-Difluor-5-methylsulfonyl-pyrimidin, 2,4-Difluor-5-phenyl-pyrimidin, 2,4-Difluor-5-carbonamide-pyrimidin, 2,4-Difluor-5-carbomethoxy-pyrimidin, 2,4-Difluor-6-trifluormethylpyrimidin, 2,4-Difluor-6-carbonamido-pyrimidin, 2,4-Difluor-6-carbomethoxypyrimidin, 2,4-Difluor-6-phenyl-pyrimidin, 2,4-Difluor-6-cyanpyrimidin, 2,4,6-Trifluor-5-methylsulfonylpyrimidin, 2,4-Difluor-5-sulfonamido-pyrimidin, 2,4-Difluor-5-chlor-6-carbomethoxy-pyrimidin, 5-Trifluormethyl-2,4-difluor-pyrimidin, 4,6-Difluor-5-chlor-pyrimidin, 4,6-Difluor-5-trifluormethyl-pyrimidin, 4,6-Difluor-2-methyl-pyrimidin, 4,6-Difluor-5-chlor-2-methyl-pyrimidin, 4,5,6-Trifluor-pyrimidin, 4,6-Difluor-5-chlor-2-trifluormethyl-pyrimidin, 4,6-Difluor-2-phenyl-pyrimidin, 4,6-Difluor-5-cyan-pyrimidin, 4,6-Difluor-5-nitro-pyrimidin, 4,6-Difluor-5-methylsulfonyl-pyrimidin, 4,6-Difluor-5-phenylsulfonyl-pyrimidin, 2,4-Dichlorpyrimidin-5-carbonsäurechlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlorpyrimidin-4-carbonsäurechlorid; Pyrimidin-Reaktivkomponenten mit abspaltbaren Sulfonylgruppen, wie 2-Carboxymethylsulfonyl-4-chlorpyrimidin, 2-Methylsulfonyl-4-chlor-6-methylpyrimidin, 2,4-Bis-methylsulfonyl-6-methylpyrimidin, 2,4-Bis-phenylsulfonyl-5-chlor-6-methylpyrimidin, 2,4,6-Trismethylsulfonyl-pyrimidin, 2,6-Bis-methylsulfonyl-4,5-dichlorpyrimidin, 2,4-Bis-methylsulfonylpyrimidin-5-sulfonsäurechlorid, 2-Methylsulfonyl-4-chlorpyrimidin, 2-Phenylsulfonyl-4-chlorpyrimidin, 2,4-Bis-trichlormethylsulfonyl-6-methylpyrimidin, 2,4-Bis-methylsulfonyl-5-chlor-6-methylprimidin, 2,4-Bis-methylsulfonyl-5-brom-6-methylpyrimidin, 2-Methylsulfonyl-4,5-dichlor-6-methylpyrimidin, 2-Methylsulfonyl-4,5-dichlor-6-chlormethylpyrimidin, 2-Methylsulfonyl-4-chlor-6-methylpyrimidin-5-sulfonsäurechlorid, 2-Methylsulfonyl-4-chlor-5-nitro-6-methylpyrimidin, 2,4,5,6-Tetramethylsulfonyl-pyrimidin, 2-Methylsulfonyl-4-chlor-5,6-dimethylpyrimidin, 2-Ethylsulfonyl-4,5-dichlor-6-methylpyrimidin, 2-Methylsulfonyl-4,6-dichlorpyrimidin, 2,4,6-Tris-methyl-sulfonyl-5-chlor-pyrimidin, 2-Methylsulfonyl-4-chlor-6-carboxypyrimidin, 2-Methylsulfonyl-4-chlorpyrimidin-5-sulfonsäure, 2-Methylsulfonyl-4-chlor-6-carbomethoxypyrimidin, 2-Methylsulfonyl-4-chlor-pyrimidin-5-carbonsäure, 2-Methylsulfonyl-4-chlor-5-cyan-methoxypyrimidin, 2-Methylsulfonyl-4,5-dichlorpyrimidin, 4,6-Bis-methylsulfonyl-pyrimidin, 4-Methylsulfonyl-6-chlorpyrimidin, 2-Sulfoethylsulfonyl-4-chlor-6-methylpyrimidin, 2-Methylsulfonyl-4-chlor-5-brompyrimidin, 2-Methylsulfonyl-4-chlor-5-brom-6-methylpyrimidin, 2,4-Bis-methylsulfonyl-5-chlor-pyrimidin, 2-Phenylsulfonyl-4,5-dichlorpyrimidin, 2-Phenylsulfonyl-4,5-dichlor-6-methylpyrimidin, 2-Carboxymethylsulfonyl-4,5-dichlor-6-methylpyrimidin, 2-(2'- oder 3'- oder 4'-Carboxyphenylsulfonyl)-4,5-dichlor-6-methylpyrimidin, 2,4-bis-(2'- oder 3'- oder 4'-Carboxyphenylsulfonyl)-5-chlor-6-methylpyrimidin, 2-Methylsulfonyl-6-chlorpyrimidin-4- oder -5-carbonsäurechlorid, 2-Ethylsulfonyl-6-chlorpyrimidin-4- oder -5-carbonsäurechlorid, 2,6-Bis-(methylsulfonyl)-pyrimidin-4-carbonsäurechlorid, 2-Methylsulfonyl-6-methyl-4-chlor- oder -4-brompyrimidin-5-carbonsäurechlorid oder -bromid, 2,6-Bis-(methylsulfonyl)-4-chlorpyrimidin-5-carbonsäurechlorid; weitere Reaktivkomponenten der heterocyclischen Reihe mit reaktiven Sulfonylsubstituenten sind beispielsweise 3,6-Bis-phenylsulfonylpyridazin, 3-Methylsulfonyl-6-chlorpyridazin,3,6-Bis-trichlormethylsulfonylpyridazin, 3,6-Bis-methylsulfonyl-4-methylpyridazin, 2,5,6-Tris-methylsulfonylpyridazin, 2,4-Bis-methylsulfonyl-1,3,5-triazin, 2,4-Bis-methylsulfonyl-6-(3'-sulfophenylamino)-1,3,5-triazin, 2,4-Bis-methylsulfonyl-6-N-methylanilino-1,3,5-triazin, 2,4-Bis-methylsulfonyl-6-phenoxy-1,3,5-triazin, 2,4-Bis-methylsulfonyl-6-trichlorethoxy-1,3,5-triazin, 2,4,6-Tris-phenylsulfonyl-1,3,5-triazin; 2,4-Bis-methylsulfonylchinazolin, 2,4-Bis-trichlormethylsulfonylchinolin, 2,4-Bis-carboxymethylsulfonylchinolin, 2,6-Bis-(methylsulfonyl)-pyridin-4-carbonsäurechlorid und 1-(4'-Chlor-carbonylphenyl oder 2'-chlorcarbonyl-ethyl)-4,5-bis-methylsulfonyl-pyridazon-(6); weitere heterocyclische Reaktivkomponenten mit beweglichem Halogen sind unter anderem 2- oder 3-Monochlorchinoxalin-6-carbonsäurechlorid oder -6-sulfonsäurechlorid, 2- oder 3-Monobromchinoxalin-6-carbonsäurebromid oder -6-sulfonsäurebromid, 2,4-Dichlorchinoxalin-6-carbonsäurechlorid oder -6-sulfonsäurechlorid, 2,3-Dibromchinoxalin-6-carbonsäurebromid oder -6-sulfonsäurebromid, 1,4-Dichlorphthalazin-6-carbonsäurechlorid oder

-6-sulfonsäurechlorid sowie die entsprechenden Bromverbindungen, 2,4-Dichlorchinazolin-6- oder -7-carbonsäurechlorid oder -7-sulfonsäurechlorid sowie die entsprechenden Bromverbindungen, 2- oder 3- oder 4-(4'-, 5'-Dichlorpyridazin-6'-yl-1')-phenylsulfonsäurechlorid oder -carbonsäurechlorid sowie die entsprechenden Bromverbindungen, ß-(4',5'-Dichlorpyridazon-6'-yl-1')-ethylcarbonsäurechlorid, 2-Chlorchinoxalin-3-carbonsäurechlorid und die entsprechende Bromverbindung, N-Methyl-N-(2,4-dichlortriazin-6)-carbamidsäurechlorrid, N-Methyl-N-(2-chlor-4-methylamino-triazinyl-6)-carbamidsäurechlorid, N-Methyl-N-(2-chlor-4-dimethylamino-triazinyl-6-)carbamidsäurechlorid, N-Methyl- oder N-Ethyl-N-(2,4-dichlortraizinyl-(6)-aminoacetylchlorid, N-Methyl-, N-Ethyl- oder N-Hydroxyethyl-N-(2,3-dichlorchinoxalin-6-sulfonyl- oder -6-carbonyl)-aminoacetylchlorid und die entsprechenden Bromderivate, ferner 2-Chlorbenzthiazol-5- oder -6-carbonsäurechlorid oder -5- oder -6-sulfonsäurechlorid und die entsprechenden Bromverbindungen, 2-Arylsulfonyl- oder 2-Alkylsulfonyl-benzthiazol-5- oder -6-carbonsäurechlorid oder -5- oder -6-sulfonsäurechlorid, wie 2-Methylsulfonyl- oder 2-Ethyl-sulfonyl- oder 2-Phenylsulfonyl-benzthiazol-5- oder -6-sulfonsäurechlorid oder -5- oder -6-carbonsäurechlorid sowie die entsprechenden in ankondensierten Benzolring Sulfonsäuregruppen enthaltenden 2-Sulfonylbenzthiazol-Derivate, 3,5-Bis-methylsulfonyl-isothiazol-4-carbonsäurechlorid, 2-Chlor-benzoxazol-5- oder -6-carbonsäurechlorid oder -sulfonsäurechlorid sowie die entsprechenden Bromderivate, 2-Chlorbenzimidazol-5- oder -6-carbonsäurechlorid oder -sulfonsäurechlorid sowie die entsprechenden Bromderivate, 2-Chlor-1-methylbenzimidazol-5- oder -6-carbonsäurechlorid oder -sulfonsäurechlorid sowie die entsprechenden Bromderivate, 2-Chlor-4-methylthiazol-(1,3)-5-carbonsäurechlorid oder -4- oder -5-sulfonsäurechlorid, 2-Chlorthiazol-4- oder -5-sulfonsäurechlorid und die entsprechenden Bromderivate. Weiterhin seien genannt: 5-Chlor-2,4,6-trifluor-isophthalonitril, 2,4,6-Trifluor-1,3,5-tricyanobenzol, 2,4,5,6-Tetrafluorisophthalonitril, 2,4,6-Trichlor-5-methylsulfonyl-pyrimidin, 2,4,6-Trichlor-5-ethylsulfonyl-pyrimidin, 2,4-Difluor-5-methylsulfonyl-6-(2'-sulfophenylamino)-pyrimidin.

Die neuen Farbstoffe der Formel (1) eignen sich um Färben und Bedrucken von Hydroxyl- oder Amidgruppen enthaltenden Materialien, wie Textilfasern-, Fäden und Geweben aus Wolle, Seide, synthetischen Polyamid-, und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprchenden freien Säuren. Die Farbstoffe wurden im allgemeinen in Form der Alkalisalze, insbesondere der Na-Salze isoliert und zum Färben eingesetzt.

Die in den Beispielen genannten Gewichte beziehen sich auf die freie Säure. Die in den Beispielen angegebene Farbkennzahlen beziehen sich auf Colour Index Hue Indication Chart (Indicator Numbers)

In den folgenden Herstellungsbeispielen haben die mit den einzelnen Kennbuchstaben gekennzeichneten Verbindungen folgende Bedeutung:

L = 5-(2'-Nitro-4'-sulfophenylamino)-2-amino-benzolsulfonsäure-1

M = 4-(2'-Nitro-4'-sulfophenylamino)-2-amino-benzolsulfonsäure-1

N = 5-(2'-Sulfo-4'-nitrophenylamino)-2-amino-benzolsulfonsäure-1

P = 4-(2'-Sulfo-4'-nitrophenylamino)-2-amino-benzolsulfonsäure-1

Q = 4-(2',4'-Difluor-5'-chlor-pyrimidinyl-6'-amino)-2-amino-benzolsulfonsäure-1

R = 4-(2'-Fluor-4'-methyl-5'-chlor-pyrimidinyl-6'-amino)-2-amino-benzolsulfonsäure-1

S = 4-(2'-Fluor-4',5'-dichlor-pyrimidinyl-6'-amino)-2-amino-benzolsulfonsäure-1

T = 4-(2'-Fluor-5'-chlor-pyrimidinyl-6'-amino)-2-amino-benzolsulfonsäure-1

U = 4-(2'-Fluor-4'-trichlormethyl-5-chlor-pyrimidinyl-6'-amino)-2-amino-benzolsulfonsäure-1

V = 4-(2'-Fluor-4'-amino-triazinyl-6'-amino)-2-amino-benzol-sulfonsäure-1

H-Säure = 1-Amino-8-hydroxy-naphthalin-3,6-disulfonsäure

K-Säure = 1-Amino-8-hydroxy-naphthalin-4,6-disulfonsäure.

Beispiel 1

Eine schwefelsäurehaltige Paste, die 28,1 g 4-ß-Sulfatoethylsulfonylanilin enthält, wird in 1 l Eiswasser angerührt. Man tropft in einer Stunde 70 ml einer 10 %igen Natriumnitritlösung ein, rührt kurze Zeit nach und entfernt den Überschuß an Nitrit mit Amidosulfonsäure. In die saure Diazotierung läßt man dann eine aus 31,9 g H-Säure in 150 ml Wasser bereitete neutrale Lösung einlaufen. Die saure Kupplung ist nach vierstündigem Rühren beendet.

38,9 g 5-(2'-Nitro-4'-sulfophenylamino)-2-amino-benzolsulfonsäure-1 (L) werden in 200 ml Wasser neutral gelöst. Nach Zusatz von 70 ml 10 %iger Natriumnitritlösung läßt man die neutrale Lösung in eine Vorlage aus 200 ml Eiswasser und 28 ml konz. Salzsäure einlaufen. Die resultierende Suspension der Diazoverbindung fügt man zu dem wie vorstehend beschrieben erhaltenen Monoazofarbstoff und stellt dann durch Einstreuen von Natriumhydrogencarbonat den pH auf 5,5-6, wobei die Kupplung o-ständig zur OH-Gruppe der H-Säure erfolgt. Nach beendeter Kupplung wird der Farbstoff durch Einstreuen von 25 Vol.-% Kaliumchlorid ausgesalzen.

Nach dem Absaugen, Trocknen und Mahlen erhält man ein dunkles Farbstoffpulver, das Baumwolle nach einem der für ß-Sulfatoethylsulfonylgruppen enthaltenden Reaktivfarbstoffe üblichen Verfahren je nach Aufwandmenge in stark grünstichig

blauen (Farbkennzahl 40) bis grünstichig schwarzen Tönen färbt. Der Farbstoff entspricht in Form der freien Säure folgender Formel

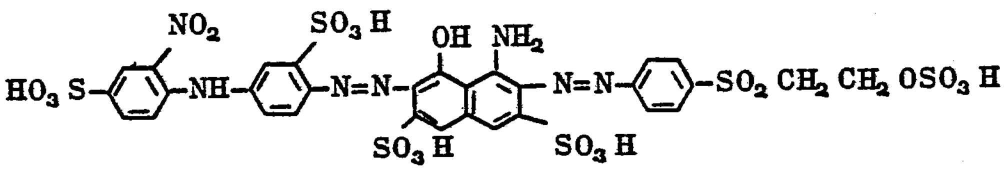

Wenn man anstelle von 38,9 g (L) die gleiche Menge der nachfolgend aufgeführten Diazokomponenten einsetzt, so erhält man wietere wertvolle Reaktivfarbstoffe, die Baumwolle zu den in der letzten Spalte genannten Tönen färben.

| Beispiel | Diazokomponente | Farbton | Farbkennzahl |
|---|---|---|---|
| 2 | 4-(2'-Nitro-4'-sulfophenylamino)-2-aminobenzolsulfonsäure-1 (M) | grünst. | 39 |
| 3 | 5-(2'-Sulfo-4'-nitrophenylamino)-2-aminobenzolsulfonsäure-1 (N) | " | " |
| 4 | 4-(2'-Sulfo-4'-nitrophenylamino)-2-aminobenzolsulfonsäure-1 (P) | " | " |

Beispiel 5

Die wie in Beispiel 1 beschrieben aus 38,9 g L erhaltene Suspension der Diazoverbindung wird tropfenweise mit einer neutralen Lösung von 31,9 g K-Säure in 150

ml Wasser versetzt. Man stellt auf pH 2 und rührt solange bei Raumtemperatur bis die Kupplung o-ständig zur $NH_2$-Gruppe der K-Säure beendet ist.

33,7 g 4-(2',4'-Difluor-5'-chlor-pyrimidinyl-6'-amino)-2-amino-benzolsulfonsäure-1 (Q) werden in 500 ml Wasser gelöst. Die Lösung versetzt man mit 10 %iger Natriumnitritlösung und läßt sie dann in eine Vorlage aus 28 ml konz. Salzsäure und 400 ml Eiswasser einlaufen. Nach kurzem Rühren entfernt man den Überschuß an Nitrit mit Amidosulfonsäure und gießt die Suspension der Diazotierung zu dem im 1. Abschnitt erhaltenen Monoazofarbstoff. Man stellt mit Natriumhydrogencarbonat auf pH 6-7, wobei die Kupplung o-ständig zur OH-Gruppe eintritt. Der Farbstoff wird durch Zugabe von 15 Vol.-% Natriumchlorid ausgesalzen und abgesaugt. Nach dem Trocknen und Mahlen erhält man ein dunkles Farbstoffpulver, das Baumwolle je nach Einsatzmenge in grünstichig blauen (Farbkennzal 39) bis tief schwarzen Tönen färbt.

In Form der freien Säure entspricht der Farbstoff der Formel

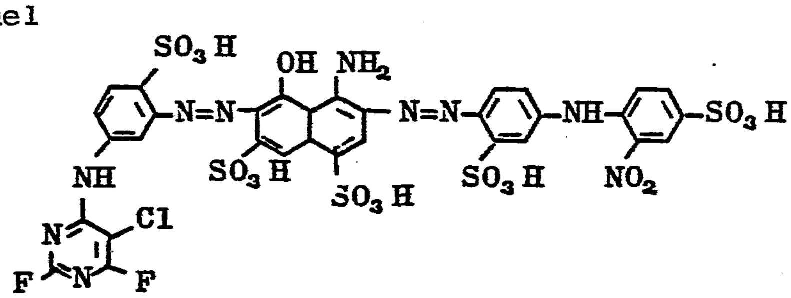

Gleichfalls wertvolle Farbstoffe erhält man nach der Arbeitsweise dieses Beispiels, wenn man für den ersten Kupplungsschritt die Diazoverbindung des Amins der

zweiten Spalte und für den zweiten diejenige des Amins der dritten Spalte einsetzt.

| Beispiel | Amin für ersten Kupplungsschritt | Amin für zweiten Kupplungsschritt | Farbton | Farbkennzahl |
|---|---|---|---|---|
| 6 | M | 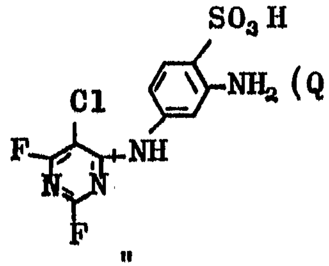 (Q) | marineblau | 38 |
| 7 | N | " | grünstichig blau | 39 |
| 8 | P | " | marineblau | 38 |
| 9 | L | 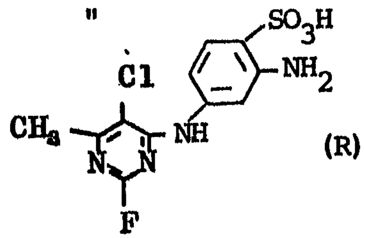 (R) | grünstichig blau | 39 |
| 10 | M | " | marineblau | 38 |
| 11 | N | " | grünstichig blau | 39 |
| 12 | P | " | marineblau | 38 |

| Beispiel | Amin für ersten Kupplungsschritt | Amin für zweiten Kupplungsschritt | Farbton | Farbkennzahl |
|---|---|---|---|---|
| 12 | L | 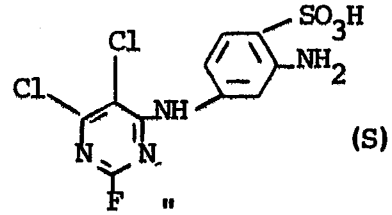 (S) | grünstichig blau | 39 |
| 13 | M | " | marineblau | 38 |
| 14 | N | " | grünstichig blau | 39 |
| 15 | P | " | marineblau | 38 |
| 16 | M | 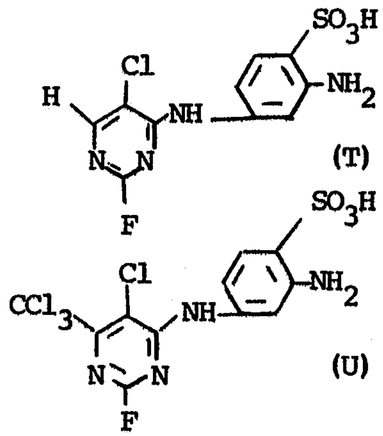 (T) | " | 38 |
| 17 | " | (U) | " | 38 |

| Beispiel | Amin für ersten Kupplungsschritt | Amin für zweiten Kupplungsschritt | Farbton | Farbkennzahl |
|---|---|---|---|---|
| 18 | L | 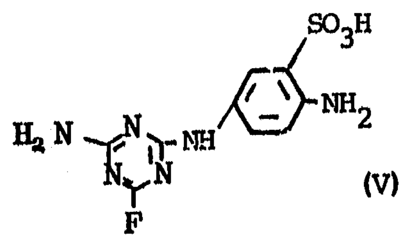 (V) | grünstichig blau | 39 |
| 19 | M | " | marineblau | 38 |
| 20 | N | " | grünstichig blau | 39 |
| 21 | P | " | marineblau | 38 |

Beispiel 22

Die aus 33,7 g Q erhaltene Suspension der Diazoverbindung, die nach den Angaben des Beispiels 5 hergestellt wird, wird tropfenweise mit einer neutralen Lösung von 31,9 g H-Säure in 150 ml Wasser versetzt. Man rührt solange bei Raumtemperatur bis die Kupplung o-ständig zur $NH_2$-Gruppe der H-Säure beendet ist. Der resultierende Monoazofarbstoff wird mit der aus 38,9 g L erhaltenen Suspension der Diazoverbindung, die nach den Angaben des Beispiels 1 hergestellt wird, versetzt und dann die Kupplung o-ständig zur OH-Gruppe der H-Säure durch Erhöhen des pH auf 6-7 mittels Natriumhydrogencarbonat ausgeführt. Der Farbstoff wird nach beendeter Kupplung durch Zugabe von 10 Vol. % Natriumchlorid ausgesalzen und abgesaugt. Nach dem Trocknen und Mahlen erhält man ein dunkles Farbstoffpulver, das Baumwolle je nach Einsatzmenge in grünstichig bleuen (Farbkennzahl 39) bis schwarzen Tönen färbt.

In Form der freien Säure entspricht der Farbstoff der Formel

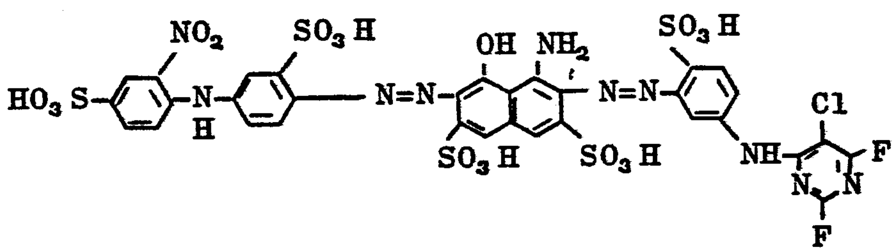

Nach den Angaben des Beispiels 22 erhält man weitere wertvolle Baumwollreaktivfarbstoffe, wenn man anstelle von E die Amine in der zweiten Spalte, anstelle von A die in

der vierten Spalte und als Mittelkomponente entweder H- oder K-Säure verwendet.

| Beispiel | Amin für ersten Kupplungsschritt | Mittel-komponente | Amin für zweiten Kupplungsschritt | Farbton | Farbkennzahl |
|---|---|---|---|---|---|
| 23 | Q | H-Säure | M | stark grünstichig blau | 40 |
| 23 | " | K-Säure | L | grünstichig blau | 39 |
| 24 | " | " | M | " | " |
| 25 | R | " | " | " | " |
| 26 | S | " | " | " | " |
| 27 | T | " | " | " | " |
| 28 | V | " | " | " | " |

| Beispiel | Amin für ersten Kupplungsschritt | Mittel-komponente | Amin für zweiten Kupplungsschritt | Farbton | Farbkenn-zahl |
|---|---|---|---|---|---|
| 29 | 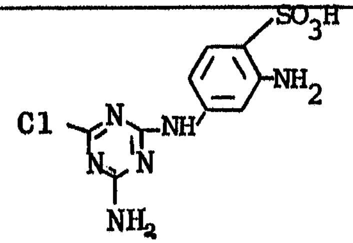 | K-Säure | M | grünstichig blau | 39 |
| 30 | 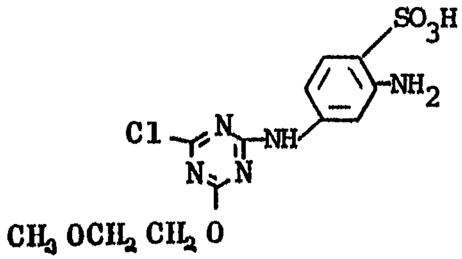 | K-Säure | M | grünstichig blau | 39 |
| | 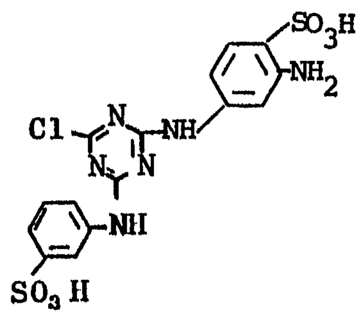 | K-Säure | M | grünstichig blau | 39 |

| Beispiel | Amin für ersten Kupplungsschritt | Mittel-komponente | Amin für zweiten Kupplungsschrit | Farbton | Farb-kennzahl |
|---|---|---|---|---|---|
| 31 | 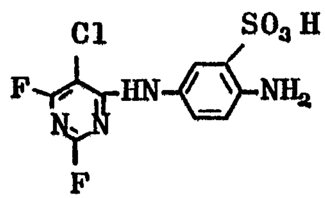 | H-Säure | L | stark grünstichig blau | 39 |

Beispiel 32

91,8 g des Farbstoffes der Formel

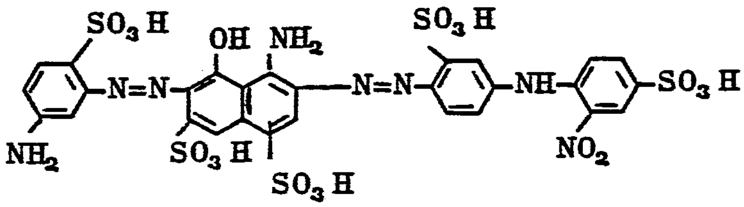

werden in 500 ml Wasser gelöst. Man tropft bei 15-20 °C 16,9 g 2,4,6-Trifluor-5-chlorpyrimidin ein und hält durch gleichzeitige Sodazogabe den pH zwischen 6-7. Nach beendeter Kondensation wird der FArbstoff ausgesalzen und abgesaugt. Nach dem Trocknen und Mahlen erhält man ein dunkles Farbstoffpulver. Der Farbstoff ist identisch mit dem nach Beispiel 1 erhaltenen.

Patentansprüche

1. Disazoreaktivfarbstoffe der allgemeinen Formel

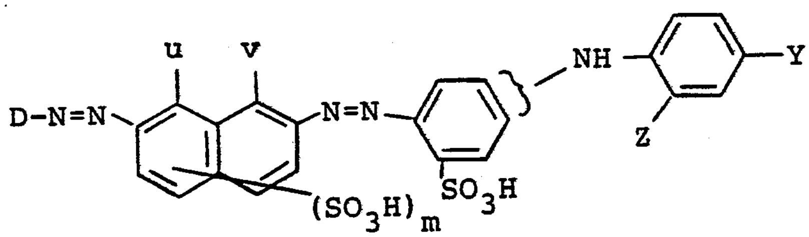

(1)

worin

D = Rest einer reaktivgruppenhaltigen Diazokomponente der Benzol- oder Naphthalinreihe,

u,v = $NH_2$ oder OH
und u ≠ v

Z, Y = $NO_2$ oder $SO_3H$
und Z ≠ Y,

m = 1 oder 2.

2. Disazoreaktivfarhstoffe gemäß Anspruch 1 der Formel

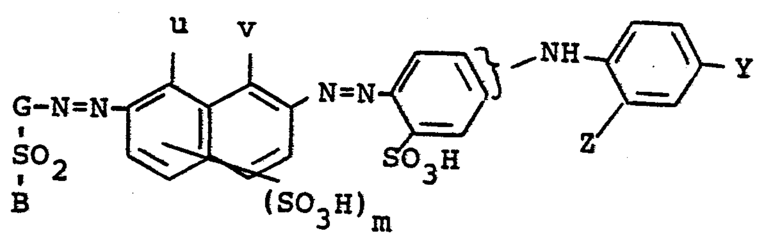

(2)

wobei

G = zweiwertiger Benzol- oder Naphthalinrest,

B = $-CH=CH_2$, $-CH_2-CH_2-OSO_3H$, $-CH_2-CH_2-OPO_3H_2$, $-CH_2-CH_2S_2O_3H$, $-CH=CHCl$, $-CH_2-CH_2Cl$

und wobei u, v, Y, Z und m die in Anspruch 1 angegebene Bedeutung besitzen.

3. Disazoreaktivfarbstoffe gemäß Anspruch 1 der Formel

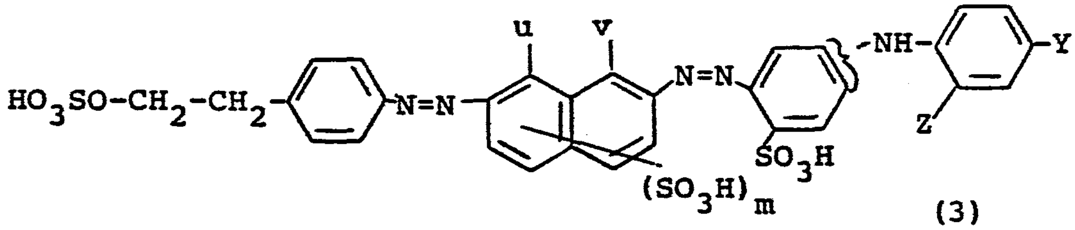

(3)

wobei u,v,Y,Z und m die in Anspruch 1 angegebene Bedeutung besitzen.

4. Disazoreaktivfarbstoffe gemäß Anspruch 1 der Formel

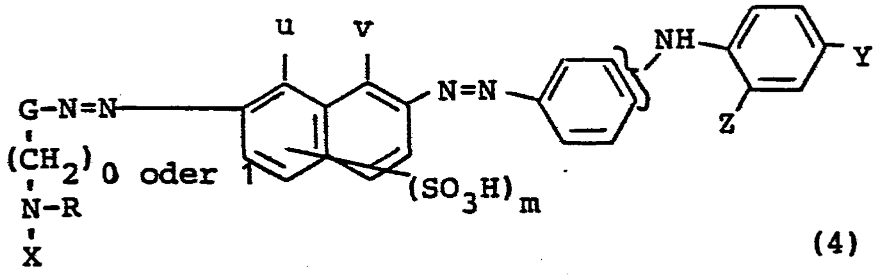

(4)

wobei

G = zweiwertiger Benzol- oder Naphthalinrest

R = H, $CH_3$ oder $C_2H_5$

X = Rest einer heterocyclischen Reaktivkomponente

und worin u,v,Y,Z und m die in Anspruch 1 angegebene Bedeutung bestzen.

5. Disazoreaktivfarbstoffe gemäß Anspruch 1 der Formel

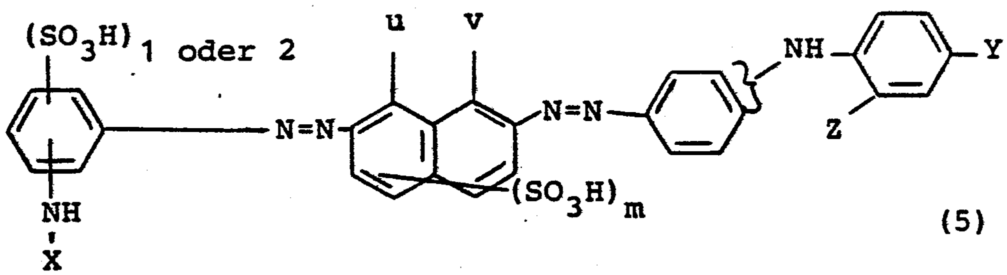

(5)

worin

X = Rest einer heterocyclischen Reaktivkomponente

und worin u,v,Y,Z und m die in Anspruch 1 angegebene Bedeutung besitzen.

6. Disazoreaktivfarbstoffe gemäß Anspruch 1 der Formel

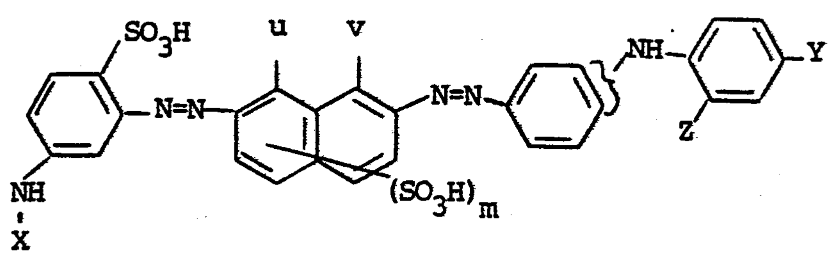

(6)

worin
X = Rest einer heterocyclischen Reaktivkomponente

und worin u,v,Y,Z und m die in Anspruch 1 angegebene Bedeutung besitzen.

7. Verfahren zur Herstellung von Disazoreaktivfarbstoffen der allgemeinen Formel

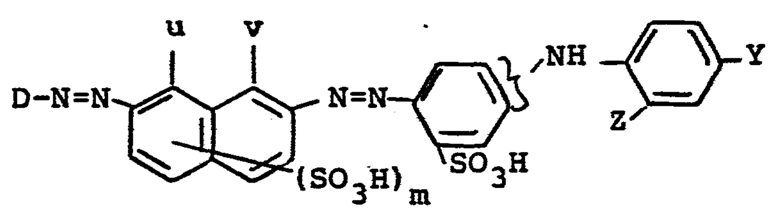

(1)

worin

D = Rest einer reaktivgruppenhaltigen Diazokomponente der Benzol- oder Naphthalinreihe

u, v = $NH_2$ oder OH
und u ≠ v

Z, Y = $NO_2$ oder $SO_3H$
und Z ≠ Y,

m = 1 oder 2,

dadurch gekennzeichnet, daß man entweder

a) eine Verbindung der Formel

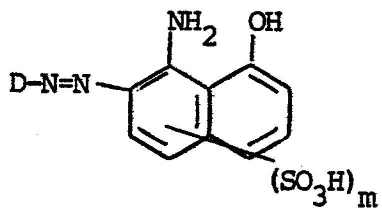

(9)

mit der aus einem Amin der Formel

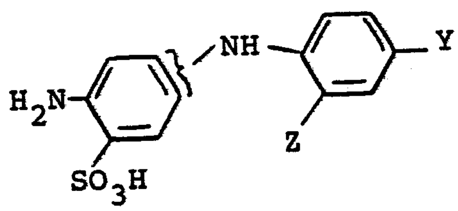

(10)

hergestellten Diazoniumverbindung im neutralen bis schwach alkalischen Medium zu einer Disazoverbindung der Formel

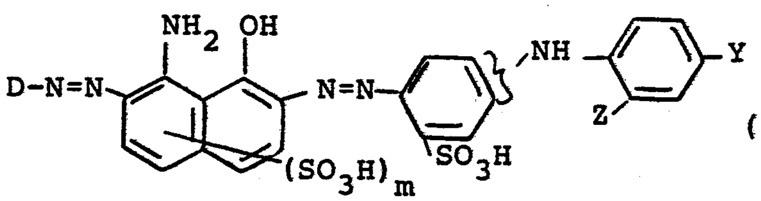

(1a)

vereinigt

oder

b) eine Azoverbindung der Formel

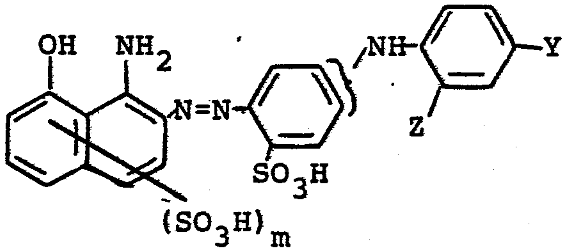

(11)

mit der aus einem Amin der Formel

$$D\text{-}NH_2 \qquad (7)$$

hergestellten Diazoniumverbindung im neutralen bis schwach alkalischen Medium zu einer Disazoverbindung der Formel

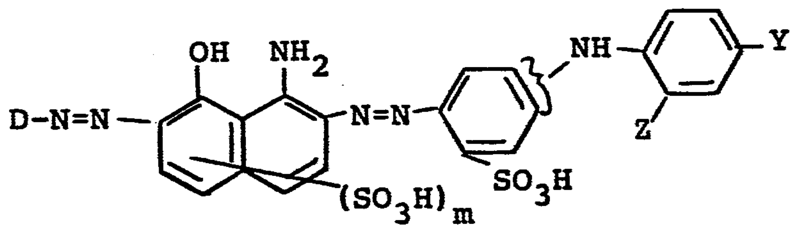

(1b)

kuppelt.

8. Verwendung von Farbstoffen gemäß Anspruch 1) bis 6) zum Färben und Bedrucken von hydroxyl- und/oder amidgruppenhaltigen Materialien.

9. Mit Farbstoffen gemäß Anspruch 1 bis 6 gefärbtes oder bedrucktes hydroxyl- und/oder amidgruppenhaltiges Material.

Europäisches Patentamt

# EUROPÄISCHER RECHERCHENBERICHT

0128316 Nummer der Anmeldung

EP 84 10 4825

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 128 413 (ICI) * Anspruch 1; Seite 1, Zeilen 20-21 * | 1 | C 09 B 62/01<br>D 06 P 3/66<br>D 06 P 3/10 |
| A | FR-A-2 429 244 (CIBA-GEIGY) * Anspruch 1 * | 1 | |
| | | | **RECHERCHIERTE SACHGEBIETE (Int. Cl. 3)** |
| | | | C 09 B |

Der vorliegende Recherchenbericht wurde für alle Patentansprüche erstellt.

| Recherchenort | Abschlußdatum der Recherche | Prüfer |
|---|---|---|
| DEN HAAG | 05-09-1984 | GINESTET M.E.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82